# DEMANDE DE BREVET EUROPEEN

(11) **EP 4 651 282 A1**
(43) Date de publication de la demande: **19.11.2025**
(21) Numéro de dépôt: 25177032.7
(22) Date de dépôt: 16.05.2025
(51) Int. Cl.: H01M 50/204, H01M 50/262, H01M 50/271, H01M 50/50

(54) **AGENCEMENT COMPRENANT UN CARTER, UN MODULE ET UN SUPPORT POUR UNE PARTIE ÉLECTRONIQUE D'UNE BATTERIE**

(30) Priorité: 16.05.2024 FR 2405006
(71) Demandeur: AMPERE s.a.s., 92100 Boulougne-Billancourt (FR)
(72) Inventeur: DESCHAMPS, Ludovic, 76410 Cleon (FR); LASADE, Fabrice, 76410 Cleon (FR)
(74) Mandataire: Renault Group

(57) **Abrégé**

L'invention porte sur un agencement (2) pour une batterie, l'agencement (2) comprenant un module (30) destiné au stockage de l'énergie électrique, un support (10) destiné à la fixation d'une partie électrique et/ou électronique (4) pour une telle batterie, un carter (20) logeant au moins un module (30) et au moins un support (10), le support (10) ayant globalement une forme de pont enjambant le module (30).

## Description

### Domaine technique de l'invention

L'invention concerne un agencement pour une batterie comprenant un carter, un module et un support pour une partie électrique et/ou électronique d'une telle batterie. L'invention porte encore sur une batterie comprenant un tel agencement. L'invention porte encore sur un véhicule comprenant une telle batterie ou un tel agencement. L'invention porte encore sur un procédé de montage d'un tel agencement.

### Etat de la technique antérieure

Un véhicule électrique ou hybride, notamment un véhicule automobile, comprend généralement une batterie de stockage de l'énergie électrique. Une telle batterie comprend généralement un carter permettant de loger au moins un module. Un tel module comprend généralement des cellules aptes à stocker de l'énergie électrique. A des fins d'optimisation de l'encombrement d'une telle batterie pour une capacité de stockage d'énergie électrique donnée, il est préférable de loger le plus volumineux module possible dans un carter offrant un volume tout juste supérieur à celui du module. Un tel carter de batterie loge généralement une partie électrique et/ou électronique, notamment nécessaire à la gestion de l'énergie électrique stockée dans son ou ses modules. Une telle partie électrique et/ou électronique convient d'être fixée.

Assurer la fixation de la partie électrique et/ou électronique engendre une perte d'espace disponible au sein du carter. Il en résulte que le volume disponible au sein d'un carter nécessite d'être bien supérieur au volume du ou des module(s) logé(s) au sein d'un tel carter.

Une telle situation n'est pas optimale.

### Présentation de l'invention

Le but de l'invention est de fournir un agencement remédiant aux inconvénients ci-dessus. En particulier, l'invention propose un agencement permettant de fixer une partie électrique et/ou électronique par l'intermédiaire d'un support particulièrement peu encombrant, facile à monter et évitant d'engendrer des vibrations aux composants électriques et/ou électroniques de la partie électrique et/ou électronique.

### Résumé de l'invention

Pour atteindre cet objectif, l'invention porte sur un agencement pour une batterie, notamment pour une batterie de traction et/ou de propulsion de véhicule, l'agencement comprenant :
- un module destiné au stockage de l'énergie électrique, le module comprenant une première face et une deuxième face, les première et deuxième faces étant parallèles ou sensiblement parallèles l'une par rapport à l'autre, et une troisième face s'étendant entre les première et deuxième faces en étant perpendiculaire ou sensiblement perpendiculaire par rapport aux première et deuxième faces,
   la première face comprenant un moyen de blocage,
- un support destiné à la fixation d'une partie électrique et/ou électronique pour une telle batterie,
- un carter logeant au moins un module et au moins un support, le carter comprenant un moyen de serrage,

le support ayant globalement une forme de pont, le support enjambant le module de sorte que les première, deuxième et troisièmes faces du module soient au moins partiellement en vis-à-vis du support,
le support comprenant un moyen de crochetage coopérant avec le moyen de blocage et un moyen de vissage coopérant avec le moyen de serrage, le support comprenant au moins un moyen élastique s'étendant contre la troisième face de sorte à créer un effort entre le support et la troisième face en réaction à la coopération du moyen de serrage avec le moyen de vissage.

Le moyen de blocage du module peut comprendre une protubérance ménagée sur la première face, la protubérance pouvant comprendre une portion de contact, notamment une portion de contact s'étendant sensiblement parallèlement à la troisième paroi,
et le moyen de crochetage du support peut comprendre un ergot pouvant comprendre une griffe venant au contact de la portion de contact de la protubérance.

Le moyen de serrage peut comprendre un taraudage ménagé sur le carter, et le moyen de vissage peut comprendre une vis traversant le support et se vissant dans le taraudage du carter.

L'au moins un moyen élastique peut comprendre une lame, notamment une lame obtenue dans le même matériau que le support.

La première face peut comprendre deux moyens de blocage et/ou le carter peut comprendre deux moyens de serrage.

Le support peut être en matière plastique, notamment venu de moulage, notamment par injection.

L'agencement peut comprendre deux modules et deux supports, chaque module pouvant être partiellement recouvert par un support, les modules pouvant être disposés côte à côte de sorte que leurs premières faces soient agencées l'une en vis-à-vis de l'autre.

L'invention porte encore sur une batterie, notamment une batterie de traction et/ou de propulsion pour un véhicule, comprenant un agencement tel que défini précédemment.

L'invention porte encore sur un véhicule, notamment un véhicule automobile, comprenant une batterie telle que définie précédemment, ou un agencement tel que défini précédemment.

L'invention porte encore sur un procédé de montage d'un agencement tel que défini précédemment, comprenant :
- une étape de fourniture d'un carter, d'un module et d'un support,
- une étape de crochetage du moyen de crochetage du support contre le moyen de blocage du module,
suivie d'une étape de plaquage du support de sorte que l'au moins un moyen élastique soit au contact de la troisième face du module,
::::::::::suivie d'une étape de serrage en utilisant le moyen de vissage du support pour coopérer avec le moyen de serrage du carter de sorte à maintenir contraint l'au moins un moyen élastique.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
La figure 1 est une vue schématique d'un véhicule automobile selon un mode de réalisation de l'invention.
La figure 2 est une vue en perspective d'un agencement selon un mode de réalisation de l'invention, une partie électronique et/ou électrique étant représentée schématiquement.
La figure 3 est une vue de dessus de l'agencement selon le mode de réalisation de l'invention.
La figure 4 est une vue en perspective partielle de l'agencement selon le mode de réalisation de l'invention.
La figure 5 est une autre vue en perspective partielle de l'agencement selon le mode de réalisation de l'invention.
La figure 6 est une vue en perspective de détail d'un support de l'agencement selon le mode de réalisation de l'invention.
La figure 7 est une autre vue en perspective de détail du support de l'agencement selon le mode de réalisation de l'invention.
La figure 8 est une vue en perspective du support de l'agencement selon le mode de réalisation de l'invention.
La figure 9 est une vue en coupe selon un plan vertical et transversal de l'agencement selon le mode de réalisation de l'invention.
La figure 10 est une vue de détail en coupe selon un plan vertical et transversal de l'agencement selon le mode de réalisation de l'invention.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

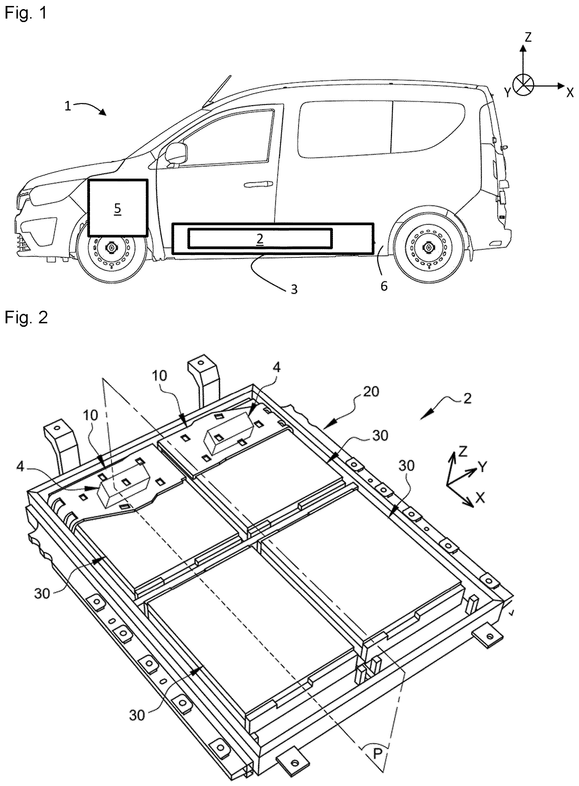

Comme illustré sur la figure 1, un véhicule 1, par exemple un véhicule automobile, comprend une caisse 6. Le véhicule 1 comprend au moins un moteur électrique 5 pour la traction et/ou la propulsion du véhicule. Le moteur électrique 5 peut être agencé à l'avant, et/ou à l'arrière du véhicule, et/ou en position centrale. Le véhicule peut comprendre un moteur thermique pour la propulsion et/ou la traction du véhicule 1 et/ou pour produire de l'énergie électrique. Le véhicule 1 comprend une batterie 3 pour le stockage d'énergie électrique, notamment destinée à la traction et/ou à la propulsion du véhicule 1. Par exemple, la batterie 3 est fixée par rapport à la caisse 6. La batterie 3 comprend une partie électronique et/ou électrique 4. La partie électrique et/ou électronique 4 permet notamment d'assurer la gestion de l'électricité de la batterie 3. Pour cela la partie électrique et/ou électronique 4 comprend des éléments et/ou composants électrique et/ou électronique.

Le véhicule 1, ou la batterie 3, comprend encore un agencement 2.

Plus précisément, comme illustré en particulier sur la figure 2, l'agencement 2 comprend au moins un module 30. Un module 30 est destiné au stockage de l'énergie électrique de la batterie 3. Pour cela un module 30 comprend de préférence des cellules (non illustrées).

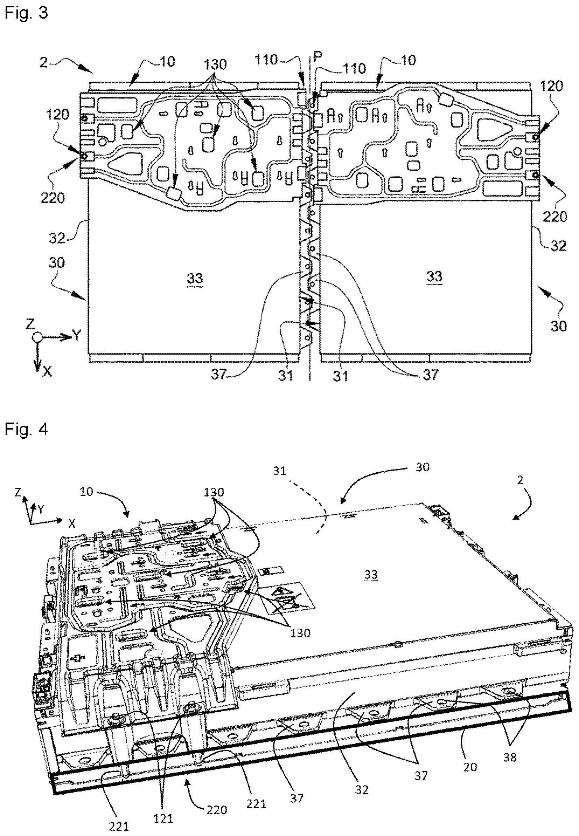

Comme illustré sur les figures 3 et 4, un module 30 comprend une première face ou paroi ou surface 31 et une deuxième face ou paroi ou surface 32. Les première et deuxième faces 31, 32 sont parallèles, tout du moins sensiblement parallèles l'une par rapport à l'autre. Un module 30 comprend une troisième face ou paroi ou surface 33 s'étendant entre les première et deuxième faces 31, 32. La troisième face 33 est perpendiculaire ou sensiblement perpendiculaire par rapport aux première et deuxième faces 31, 32. Avantageusement, un module 30 a une forme générale de parallélépipède rectangle et comprend trois paires de faces. De préférence, la troisième face 33 est une face de la paire de faces ayant les plus grandes aires.

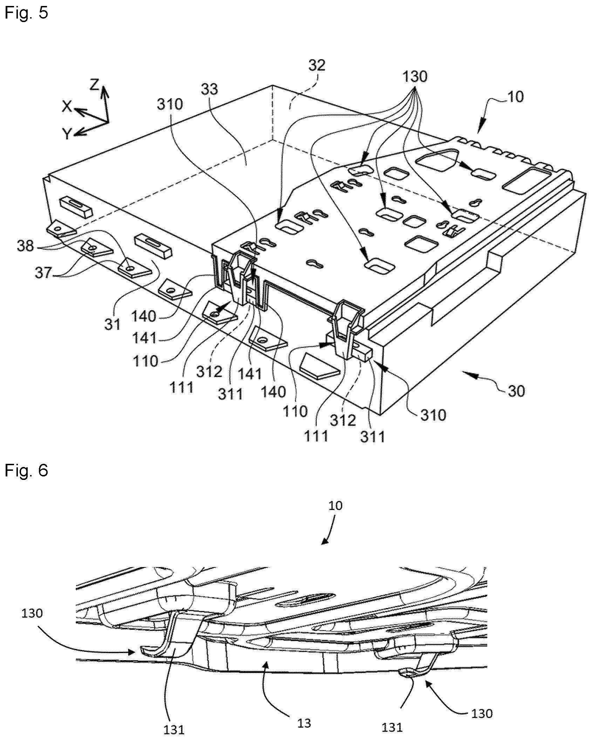

Comme illustré en particulier sur la figure 5, la première face 31 d'un module 30 comprend un moyen de blocage 310.

L'agencement 2 comprend encore un carter ou structure ou boîtier 20 pour loger, agencer, stocker l'au moins un module 30 et au moins un support 10. Par exemple, le carter 20 a notamment la fonction de protéger le ou les modules de la batterie (notamment afin de protéger les cellules présentes dans un module) et/ou les composants d'une partie électrique et/ou électronique 4 en cas de choc rencontré par le véhicule. En effet, les cellules agencées dans un module de batterie ne doivent pas subir de forte déformation sous peine de risquer d'engendrer un échauffement, voire un incendie et/ou une explosion. Par exemple, le carter 20 est obtenu en acier et/ou en alliage d'aluminium. Le carter 20 comprend encore un moyen de serrage 220 illustré notamment sur les figures 3 et 4.

L'agencement 2 comprend encore au moins un support 10. Un support 10 est destiné à assurer la fixation de la partie électrique et/ou électronique 4. Le support 10 est avantageusement en matière plastique, par exemple venu de moulage, par exemple par injection.

Plus précisément, comme illustré en particulier sur les figures 3, 4, 7 et 8, le support 10 a globalement une forme de pont, de U à l'envers, de sorte que le support 10 enjambe, chevauche, un module 30. Lorsqu'un support 10 est positionné par rapport à un module 30, les première, deuxième et troisièmes faces 31, 32, 33 du module 30 sont au moins partiellement en vis-à-vis du support, comme illustré en particulier sur les figures 2, 3, 4 et 5.

Pour assurer sa fixation, le support 10 comprend un moyen de crochetage 110 coopérant avec le moyen de blocage 310 du module 30. Le support 10 comprend encore un moyen de vissage 120 coopérant avec le moyen de serrage 220. Surtout, le support 10 comprend au moins un moyen élastique 130 s'étendant contre la troisième face 33 en position fixée du support 10 par rapport au module 30. Le moyen élastique génère ainsi un effort entre le support et la troisième face 33 en réaction à la coopération du moyen de serrage 220 avec le moyen de vissage 120 comme il sera expliqué par la suite. De préférence, comme illustré sur les figures 3, 4, 5 et 8, six moyens élastiques 130 sont prévus sur le support 10. Alternativement, moins de moyens élastiques, ou davantage de moyens élastiques, peuvent convenir également. Par exemple le nombre de moyens élastiques 130 est déterminé selon le matériau utilisé et l'effort de pression que l'on souhaite et/ou que l'on ne doit pas dépasser contre la face 33. Avantageusement, comme illustré sur la figure 6, un moyen élastique 130 comprend une lame ou languette ou lamelle 131. La lame 131 est par exemple courbée de sorte que le contact avec la troisième face 33 du module soit linéaire, voire sensiblement ponctuel. Avantageusement, les lames 131 sont obtenues dans le même matériau que le support 10, de préférence en étant venues de moulage avec le support.

Comme illustré en particulier sur la figure 5, le moyen de blocage 310 du module 30 comprend une protubérance 311 ménagée sur la première face 31. Par exemple, la protubérance 311 a une forme globale de parallélépipède rectangle s'étendant en saillie depuis la première face 31 du module 30. De préférence, la protubérance 311 comprend une portion de contact 312, par exemple une portion plane, de préférence une face du parallélépipède rectangle constituant la protubérance 311. Avantageusement, la portion de contact 312 s'étend sensiblement parallèlement à la troisième paroi 33.

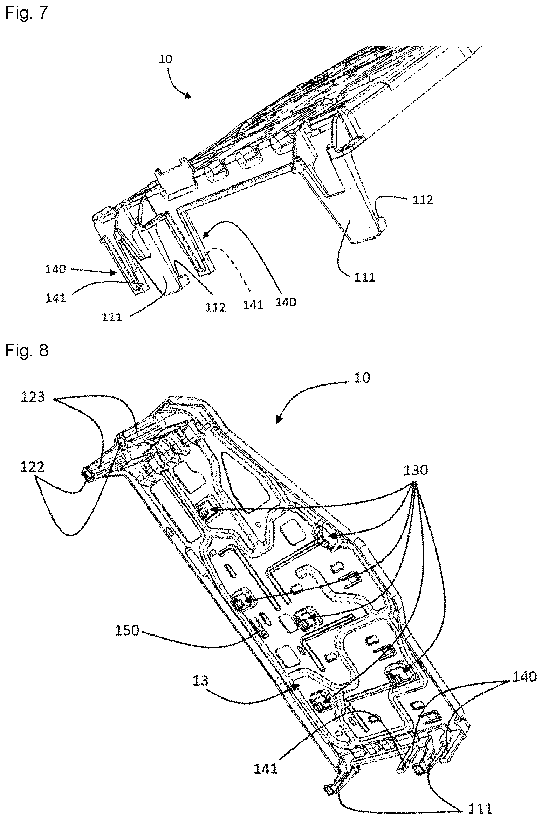

Le moyen de crochetage 110 du support 10 comprend de préférence un ergot ou une extension ou un doigt ou une patte de maintien 111 s'étendant au moins partiellement le long de la première face 31. Comme illustré sur la figure 7, l'ergot 111 comprend de préférence une griffe ou crochet 112 destiné à venir au contact de la portion de contact 312 de la protubérance 311.

Comme illustré sur la figure 4, le moyen de serrage 220 du carter 20 comprend un taraudage 221 ménagé sur ou dans le carter 20.

Alternativement ou en complément, un écrou rapporté, par exemple soudé au carter 20 et/ou logé dans une empreinte adaptée, remplace la réalisation d'un tel taraudage 221.

Le moyen de vissage 120 comprend une vis 121 traversant le support 10. Pour ce faire, comme illustré sur la figure 8, un trou 122 est ménagé dans le support 10 au niveau d'une extension 123. L'extension 123 est destinée à venir s'étendre au moins partiellement le long de la deuxième face 32 du module. Ainsi, la vis 121 traverse le support 10 par le trou 122 de l'extension 123 et est destinée à se visser dans le taraudage 221 du carter 20.

De préférence, comme illustré dans le mode réalisation présenté, un même support 10 comprend deux ergots 111 et le module 30 comprend au moins deux protubérances 311 aptes à coopérer avec ces deux ergots du côté de la première face 31. De préférence, comme illustré dans le mode réalisation présenté, un même support 10 est traversé par deux vis 121, le support comprenant deux extensions 123 percée chacune d'un trou 122. Le carter 20 est alors prévu pour recevoir ces deux vis 121, de préférence via deux taraudages 221. Autrement dit, la première face 31 d'un module 30 comprend deux moyens de blocage 310 qui coopèrent avec les deux moyens de crochetage 110 d'un support. De préférence, le carter 20 de la batterie comprend deux moyens de serrage 220 et le support 10 comprend deux moyens de vissage 120 traversant deux extensions 123 du support. Comme évoqué précédemment, ce sont deux vis 121 passant à travers des trous 122 ménagés dans des extensions 123 du support 10 qui assurent la fixation du support sur le carter du côté de la deuxième face 32 du module.

Ainsi, de préférence, le support 10 est fixé sur le module 30 du côté de la première face 31 via deux griffes 112 s'étendant depuis deux ergots 111 du support et venant au contact de deux portions planes 312 des deux protubérances 311 s'étendant depuis le module. Ce support 10 est alors fixé par rapport au module 30, du côté de la deuxième face 32 du module, par deux vis 121 se vissant dans des taraudages 221 ménagés dans le carter 20. Le support 10 est donc maintenu par rapport au module au niveau de la première face 31 du module et par rapport au carter 20 au niveau de la deuxième face 32 du module. A noter que le module 30 est fixé sur le carter 20 par des moyens 37 de type extensions, au moins du côté de la première face 31 et du côté de la deuxième face 32. Ces extensions 37 s'étendent sensiblement parallèlement à la troisième face 33 et comprennent des orifices 38 perpendiculaires à la troisième face 33 comme illustré sur les figures 3, 4 et 5 notamment.

Alternativement, étant donné que le module est solidement fixé sur le carter, le support est maintenu par rapport au module au niveau de la première face du module comme décrit ci-dessus et, du côté de la deuxième face du module, par un ou plusieurs systèmes vis-écrou, un écrou ou des écrous étant par exemple sertis ou surmoulés ou fixés directement sur le carter.

De préférence, comme illustré sur la figure 3, l'agencement 2 comprend deux modules 30 et deux supports 10, chaque module étant surmonté par un support. A noter qu'un seul carter 20 permet de loger ce type d'agencement. Avantageusement, comme illustré sur la figure 2, l'agencement 2 comprend un seul carter 20, deux supports 10 et quatre modules 30. A noter que deux supports 10 suffisent pour assurer la fixation de la partie électrique et/ou électronique 4 des quatre modules si bien que deux modules ne reçoivent pas de support.

C'est en particulier dans ce contexte que la solution est avantageuse. En effet, dans un tel contexte on cherche à optimiser l'espace disponible au sein du carter pour loger le nombre maximal de modules. Par exemple, doubler le nombre de modules permet de doubler l'autonomie de la batterie et, le cas échéant, l'autonomie du véhicule 1. De préférence, le nombre de modules est pair et les modules sont agencés de part et d'autre d'un plan P illustré sur les figures 2 et 3. Par exemple le plan P s'étend selon les directions verticale et longitudinale du véhicule. Comme illustré sur la figure 3, les première faces 31 des modules sont agencées pour se retrouver en vis-à-vis, c'est-à-dire que les modules sont alignés les uns par rapport aux autres. A noter que les modules sont avantageusement identiques et conçus de sorte qu'ils puissent être pivotés de 180 degrés autour d'un axe vertical. Ainsi, comme illustré sur la figure 3, la première face 31 d'un premier module et la première face 31 d'un deuxième module jouxtant le premier module, se retrouvent en vis-à-vis, à proximité immédiate l'une de l'autre. En effet, grâce à la solution, il devient possible de disposer deux modules côte à côté en laissant un jeu très faible entre eux. Eventuellement, les moyens de fixation 37 sont agencés en quinconce si bien que deux modules adjacents s'imbriquent sensiblement l'un par rapport à l'autre. Une telle disposition de deux modules adjacents minimise l'encombrement de ces deux modules. Etant donné cette disposition, les moyens de crochetage 110 d'un support 10 enjambant un premier module peuvent être agencés contre la première face 31 du premier module alors que les moyens de crochetage 110 d'un support enjambant un deuxième module jouxtant le premier module, peuvent également être agencés contre la première face 31 du deuxième module. Ainsi, malgré le faible espace de part et d'autre du plan P, les moyens de crochetage de deux supports peuvent être insérer et peuvent alors crocheter les moyens de blocage 310 respectifs des deux modules en vis-à-vis.

Comme illustré en particulier sur la figure 3, les supports 10 sont de préférence identiques. Ainsi, un deuxième support identique à un premier support surmontant un premier module, est pivoté de 180 degrés autour d'un axe vertical pour venir surmonter un deuxième module agencé à proximité immédiate du premier module.

Autrement dit, chaque module est partiellement recouvert par son support respectif 10, les deux modules 30 étant disposés côte à côte de sorte que leurs premières faces 31 soient agencées l'une en vis-à-vis de l'autre. Comme évoqué précédemment, par exemple seulement deux supports suffisent pour embarquer les éléments électriques et/ou électroniques et par conséquent seulement deux modules sont partiellement recouverts.

Avantageusement, comme illustré sur les figures 7 et 8, le support 10 comprend au moins une extension ou doigt d'indexage et/ou de guidage 140. De préférence, deux doigts 140 sont configurés pour venir de part et d'autre d'une des deux protubérances 311 servant à la fixation du support. De préférence, chaque doigt 140 comprend une face plane, un méplat 141 illustré sur la figure 7. Une fois le support monté sur le module correspondant, le méplat 141 s'étend dans un plan transversal et vertical ou sensiblement dans un plan transversal et vertical. De telles faces planes 141 sont destinées à venir au contact de faces de la protubérance 311 comme illustré sur la figure 5. Les deux faces de contact de la protubérance 311 s'étendent alors également de préférence parallèlement à un plan vertical et transversal. A noter que ces doigts 140 n'empêchent pas le pivotement, ou mouvement de charnière, lors de l'assemblage du support vis-à-vis du module qui sera vu par la suite.

Un mode d'exécution d'un procédé de montage de l'agencement 2 va maintenant être décrit.

Dans un premier temps, on fournit un carter 20, un module 30 et un support 10.

Ensuite, de préférence, on fixe le module 30 sur le carter 20, par exemple via des vis (non illustrées) traversant le module 30 au niveau des trous 38 des moyens de fixation 37 et venant se visser dans des taraudages ou écrous rapportés sur le carter 20.

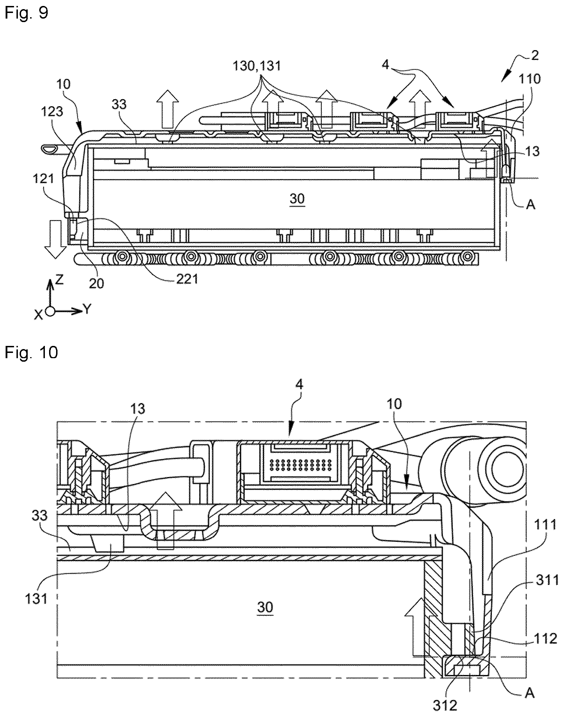

Ensuite, on crochète, on clipse le ou les moyens de crochetage 110 du support 10 contre le, respectivement les moyens de blocage 310 du module 30. Pour rappel, comme illustré sur la figure 7, un moyen de crochetage 110 comprend de préférence un ergot 111 comprenant une griffe 112 à son extrémité tandis qu'un moyen de blocage 310 comprend de préférence une protubérance 311 comprenant la portion de contact plane 312 comme illustré sur la figure 5. Pour cette deuxième étape, on approche de préférence le support avec un léger angle issu d'un pivotement dans un premier sens autour d'un axe A parallèle à la direction longitudinale compte tenue de l'orientation du module (voir figure 9). Ainsi, on approche le support de manière oblique, de sorte à venir « embecter » la griffe 112 du support sous la portion de contact 312 du module. De préférence, les modules s'étendent de telle manière que le pivotement pour le montage du support se fait autour d'un axe s'étendant longitudinalement, c'est-à-dire que l'axe de rotation de la « charnière » est parallèle à l'axe X.

Ensuite, une fois la griffe 112 en prise avec, au contact de, contre la portion 312, on pivote le support dans le deuxième sens autour de l'axe A. Le deuxième sens est contraire au premier sens. Ce léger pivotement a pour conséquence de tendre à plaquer une face interne 13 (voir figure 8 notamment) du support 10 vers la troisième face 33 du module correspondant. Pour rappel, le ou les moyens élastiques 130 s'étendent depuis ou au niveau de la face interne 13 en direction de la troisième face 33. En outre, ces moyens ou languettes élastiques empêchent le pivotement dans le deuxième sens du support 10. Toutefois, de préférence, il est aisé de contraindre ces moyens élastiques afin que la face interne 13 du support se retrouve sensiblement parallèle à la troisième face 33 du module.

Ainsi, on procède à une étape de plaquage du support 10 de sorte que les moyens élastiques 130, plus précisément les lames 131 de chaque moyen 130, soient au contact de la troisième face 33 du module 30. Ainsi, on contraint les moyens élastiques 130 afin d'assurer un contact entre eux et la troisième face 33 du module.

On procède ensuite à une étape de serrage en utilisant le moyen de vissage 120, de préférence des vis 121, pour coopérer avec le moyen de serrage 220 du carter 20, de préférence des taraudages ou écrous 221, pour maintenir contraints les moyens élastiques 130 contre la troisième face 33. Ainsi, le support 10 est maintenu de manière fiable et durable d'une part sur le module et d'autre part sur le carter. Surtout, les moyens élastiques évitent que la partie électrique et/ou électronique fixée sur le support reçoive, perçoive, encaisse des vibrations. En effet, tous jeux entre le support et la face 33 de réception principale du support sont rattrapés. De tels jeux sont par exemple dus aux dispersions émanant des procédés de fabrication du support et/ou du module. Ainsi, les éléments électriques et/ou électroniques de la partie électrique et/ou électronique 4 sont maintenus sur un support exempt de vibrations par rapport au module sur lequel le support est implanté.

De préférence, chaque extension percée 123 du support a une longueur prédéterminée selon la direction verticale pour assurer l'effort ou contrainte recherchée au niveau des languettes 131 une fois le contact des extensions 123 obtenu contre le carter 20. Ainsi, le couple de serrage des vis 121 est sans incidence sur l'effort de réaction des lamelles 131. A noter que le contact entre la griffe 112, de préférence comprenant une zone plane, et la portion de contact 312, de préférence plane également, est un contact ou appui plan entre la griffe 112 et la portion 312, c'est-à-dire sans clip ou clips.

En résumé, la solution porte sur la fixation du support 10 de boitier électronique 4 par contre réaction de lamelles ressort 131, les efforts émanant du serrage des vis 121 d'un côté du support. En effet, on crée un effort sur le support 10 en serrant les vis 121 dans le carter 20 d'un côté du support alors que l'autre côté du support est maintenu par la coopération entre les doigts 112 du support et les portions 312 du module 30. Cet effort de serrage est contré, repris, par les languettes élastique 131 s'étendant depuis la face interne 13 du support 10 et venant au contact de la troisième face 33 du module, comme illustré par des flèches sur les figures 9 et 10. Ainsi, seul le côté du support venant à proximité du cadre du carter 20 utilise des vis de fixation. Le côté opposé du support 10, agencé au niveau du plan P est simplement bloqué, coincé par la coopération griffes 112 et portions 312 de sorte à empêcher une extraction purement verticale du support. Dans le mode de réalisation illustré, seules deux vis 121 suffisent à la fixation d'un support 10. En outre, du côté du plan P illustré sur les figures 2 et 3, peu d'espace suffit pour embecter, crocheter les doigts 111 derrière, plus précisément sous les protubérances 311 s'étendant depuis le module. Autrement dit, plutôt que d'utiliser deux vis de part et d'autre du support, la solution évite d'implanter des vis en partie centrale du carter 20, au niveau du plan P entre deux supports 10. Ainsi, malgré cette architecture contrainte au sein du carter 20 de la batterie 3, on parvient à fixer deux supports 10 côte à côte enjambant deux modules 30 agencés également côte à côte. Il en résulte une optimisation du volume interne du carter 20, les modules 30 et par conséquent les supports 10 étant extrêmement proches les uns des autres. Surtout, grâce à la présence des lames élastiques 130, on rattrape tout jeu au montage lié aux tolérances des pièces, en particulier celles des supports, des modules et le cas échéant du carter, composant l'agencement. En effet, le principe de contre effort des lamelles 131 crée une résistance selon la direction verticale contre le module et assure une fixation du support 10 fiable et durable. Il suffit alors de fixer la partie électrique et/ou électronique 4 sur le support 10, éventuellement via des moyens élastiques 150 ménagés sur le support (figure 8) et s'étendant vers le haut du support 10 pour assurer le maintien fiable et durable et sans vibration de la partie 4.

Grâce à la solution, on permet un montage des supports 10 en aveugle, avec peu voire sans visibilité, au niveau du plan P entre les deux modules, autrement dit en partie centrale selon la direction transversale. En effet, la présence des deux doigts d'indexage 140 notamment assure le positionnement du support 10 selon la direction longitudinale par rapport au module que le support chevauche. Ainsi, eu égard à la forme en pont ou U inversé du support auquel s'ajoute les doigts d'indexage 140, le pré positionnement et le détrompage sont élémentaires. Autrement dit, les deux doigts 140 forment un détrompeur tout en facilitant le montage. En outre, le positionnement très précis du support 10 vis-à-vis du module 30 selon la direction longitudinale est assuré par le contact des faces 141 des doigts 140 de part et d'autre de la protubérance 311 correspondante. Le travail de l'opérateur de montage s'en trouve facilité, même si ce montage se fait « en aveugle ».

Pour rappel, de préférence la fixation du support 10 est réalisée d'un côté du support, via ses pattes de maintien 111 avec des appuis plan contre les portions planes 312 des protubérances 311 du module 30 (autrement dit, sans clipsage), les deux doigts de guidage et/ou indexage 140 assurant le positionnement longitudinal et a fortiori transversal, et, de l'autre côté du support, via le vissage de deux vis 121 dans le carter 20. La tenue ou maintien en position du support 10 est complétée par le système de contre réaction des lamelles ressort 131 agissant contre la face 33 du module par réaction au maintien au niveau des pattes 111 d'un côté du support, et au serrage des deux vis 121 dans les taraudages 221 du carter 20 de l'autre côté. Autrement dit, la gestion ou compensation des tolérances d'assemblage est assurée par la présence d'un plan d'appui sur les pattes 111 sans clipsage dans un plan longitudinal et transversal et par la contre réaction des lamelles ressorts 131 selon la direction verticale.

Outre les gains en termes d'ergonomie pour le montage des supports 10 malgré le manque d'espace au sein du carter 20 de la batterie, la solution permet de renforcer les fixations tout en rattrapant les jeux et en évitant la création de vibrations entre le support et le module. De telles vibrations seraient en effet néfastes pour la partie électrique et/ou électronique 4 éventuellement fragile supportée par le support 10. La solution est facile à mettre en œuvre et ne nécessite pas de gros changements dans le procédé de montage. La facilité de montage associée à un détrompage simultané offrent un gain de productivité, en particulier en termes de temps. Enfin, le démontage du support depuis le module 30 et le carter 20 par rapport auxquels il est fixé est possible et aisé. Ainsi, la maintenance, voire le remplacement d'un module sous un support 10, sont simplifiés et rapides.

A noter qu'à des fins de standardisation et donc d'économie d'échelle, de préférence, les supports 10 sont identiques, et, de préférence, les modules 30 sont également identiques. Avantageusement, comme illustré en particulier sur la figure 3, les formes des supports et/ou des modules sont prévues de sorte que seuls des pivotements autour d'un axe vertical suffisent pour orienter correctement les modules et/ou les supports vis-à-vis des emplacements auxquels ils sont destinés. En outre, de tels supports et/ou de tels modules sont avantageusement utilisés pour plusieurs gammes de véhicules. On obtient alors des économies en termes de conception, de fabrication ou encore de référencement de pièces.

Eventuellement, le carter est également commun à plusieurs véhicules. Par exemple, à des fins de prix de vente de véhicules attractifs, la batterie comprend un carter ne logeant que deux modules bien que quatre modules puissent être logés dans le carter. De préférence, le carter contient soit trois modules, soit quatre modules.

En remarque, la solution atteint donc l'objectif recherché de maximiser le volume des modules présents au sein d'un carter de batterie, en particulier grâce à un support pour la partie électrique et/ou électronique de la batterie particulièrement peu encombrant, et présente l'avantage de pouvoir être utilisée pour des batteries équipant d'autres types de véhicules, tels que des bus, camions, engins agricoles, engins de levage, ou encore aéronefs, embarcations flottantes, ou bien des batteries non destinées à être embarquées.

## Revendications

1. Agencement (2) pour une batterie (3), notamment pour une batterie de traction et/ou de propulsion de véhicule (1), l'agencement (2) comprenant :
- un module (30) destiné au stockage de l'énergie électrique, le module (30) comprenant une première face (31) et une deuxième face (32), les première et deuxième faces (31, 32) étant parallèles ou sensiblement parallèles l'une par rapport à l'autre, et une troisième face (33) s'étendant entre les première et deuxième faces (31, 32) en étant perpendiculaire ou sensiblement perpendiculaire par rapport aux première et deuxième faces (31, 32),
la première face (31) comprenant un moyen de blocage (310),
- un support (10) destiné à la fixation d'une partie électrique et/ou électronique (4) pour une telle batterie (3),
- un carter (20) logeant au moins un module (30) et au moins un support (10), le carter (20) comprenant un moyen de serrage (220),
le support (10) ayant globalement une forme de pont, le support (10) enjambant le module (30) de sorte que les première, deuxième et troisièmes faces (31, 32, 33) du module (30) soient au moins partiellement en vis-à-vis du support (10),
le support (10) comprenant un moyen de crochetage (110) coopérant avec le moyen de blocage (310) et un moyen de vissage (120) coopérant avec le moyen de serrage (220),
le support (10) comprenant au moins un moyen élastique (130) s'étendant contre la troisième face (33) de sorte à créer un effort entre le support (10) et la troisième face (33) en réaction à la coopération du moyen de serrage (220) avec le moyen de vissage (120).

2. Agencement (2) selon la revendication précédente, **caractérisé en ce que** le moyen de blocage (310) du module (30) comprend une protubérance (311) ménagée sur la première face (31), la protubérance (311) comprenant une portion de contact (312), notamment une portion de contact (312) s'étendant sensiblement parallèlement à la troisième paroi (33),
et **en ce que** le moyen de crochetage (110) du support (10) comprend un ergot (111) comprenant une griffe (112) venant au contact de la portion de contact (312) de la protubérance (311).

3. Agencement (2) selon l'une des revendications précédentes, **caractérisé en ce que** le moyen de serrage (220) comprend un taraudage (221) ménagé sur le carter (20),
et **en ce que** le moyen de vissage (120) comprend une vis (121) traversant le support (10) et se vissant dans le taraudage (221) du carter (20).

4. Agencement (2) selon l'une des revendications précédentes, **caractérisé en ce que** l'au moins un moyen élastique (130) comprend une lame (131), notamment une lame obtenue dans le même matériau que le support (10).

5. Agencement (2) selon l'une des revendications précédentes, **caractérisé en ce que** la première face (31) comprend deux moyens de blocage (310) et/ou **en ce que** le carter (20) comprend deux moyens de serrage (220).

6. Agencement (2) selon l'une des revendications précédentes, **caractérisé en ce que** le support (10) est en matière plastique, notamment venu de moulage, notamment par injection.

7. Agencement (2) selon l'une des revendications précédentes, **caractérisé en ce que** l'agencement (2) comprend deux modules (30) et deux supports (10), chaque module étant partiellement recouvert par un support (10), les modules (30) étant disposés côte à côte de sorte que leurs premières faces (31) soient agencées l'une en vis-à-vis de l'autre.

8. Batterie (3), notamment batterie de traction et/ou de propulsion pour véhicule (1), **caractérisée en ce qu'**elle comprend un agencement (2) selon l'une des revendications précédentes.

9. Véhicule, notamment véhicule automobile (1), **caractérisé en ce qu'**il comprend une batterie (3) selon la revendication précédente, ou un agencement (2) selon l'une des revendications 1 à 7.

10. Procédé de montage d'un agencement (2) selon l'une des revendications 1 à 6, **caractérisé en ce qu'**il comprend :
- une étape de fourniture d'un carter (20), d'un module (30) et d'un support (10),
- une étape de crochetage du moyen de crochetage (110) du support (10) contre le moyen de blocage (310) du module (30),
suivie d'une étape de plaquage du support (10) de sorte que l'au moins un moyen élastique (130) soit au contact de la troisième face (33) du module (30),
suivie d'une étape de serrage en utilisant le moyen de vissage (120) du support (10) pour coopérer avec le moyen de serrage (220) du carter (20) de sorte à maintenir contraint l'au moins un moyen élastique (130).
